# EUROPEAN PATENT SPECIFICATION

(11) **EP 0 775 278 B1**
(45) Date of publication and mention of the grant of the patent: **12.04.2000**
(21) Application number: 95944009.0
(22) Date of filing: 26.07.1995
(51) Int. Cl.: F16K 7/12

(54) **DIAPHRAGM VALVE**
MEMBRANVENTIL
VANNE A MEMBRANE

(30) Priority: 08.08.1994 IT MI941726
(43) Date of publication of application: 28.05.1997
(73) Proprietor: RUPNIK S.P.A., 16121 Genova (IT)
(72) Inventor: RUPNIK, Carlo, I-16136 Genova (IT); RUPNIK, Giorgio, I-16121 Genova (IT)
(74) Representative: Ferroni, Filippo
(86) International application number: EP9502957
(87) International publication number: WO9605456

(56) References cited:
- CH-A- 354 640
- GB-A- 376 702
- GB-A- 1 138 088
- GB-A- 2 026 140
- GB-A- 2 101 712

## Description

The present invention relates to a diaphragm valve comprising the features defined in the preamble of claim 1, as shown for example in GB-A-2101712.

### Background of the Invention

Diaphragm valves of the kind outlined above are already known and widely used in the industry especially where fluids aggressive for the valve actuator members and the environment are involved. Indeed a major feature of such valves is that the valve body, through which a fluid to be intercepted flows, can be separated from the valve actuator members accommodated within the bonnet.

This separation is provided by the diaphragm that forms a partition which specifically isolates the valve driving stem, that is arranged to press the diaphragm onto the seat and accordingly to intercept the fluid along the aforementioned flowpath.

For the manual operation of such valves, the driving stem is formed with a screw thread which is adapted to engage with a corresponding nut thread formed within the sleeve. A handwheel is mounted on an end of the stem projecting from the sleeve to manually rotate and move the stem toward and away from the diaphragm by means of the twisting pair formed by the stem screw thread and the nut thread of the sleeve.

This type of valve has the advantage that it can provide an accurate control of the stem by the aforementioned engagement of the stem screw thread with the nut thread of the sleeve, but has some limitations which may affect its performance.

Among these limitations is the fact that the valve is unsuitable for use with hydraulic or pneumatic stem operating systems; indeed, for operating-diaphragm valves hydraulic or pneumatic servomotors may be employed, instead of the manual operation system, which reciprocate linearly i.e. perform a back and forth movement that obviously cannot match with the threaded engagement described in the foregoing.

As a direct consequence of this specially designed valve driving members such as the stem and the bonnet must be used, which are different from those used with rotary control valves, whenever servomotors of this kind are employed.

This involves evident difficulties from an operative and cost saving point of view in the manufacture, installation and maintenance of the valves. For instance, individual production setups are necessary to make those parts that differ from one valve type to another, thereby resulting in increased costs and difficulties in stock management.

In GB-A-376702 a stop cock is shown applicable to pipes for the flow of liquids or gases. A valve diaphragm is used in the cock, actuated by a piston axially moved in a socket by a thumb piece. For the axial movement of the piston, the thumb piece is screw coupled to the socket and is connected to the piston by means of a screw, the head of which does not engage the thumb piece but leaves it free to turn.

### Summary of the Invention

It is the object of the present invention to provide a diaphragm valve which has such constructional and operational features as to overcome the drawbacks referred above with reference to the prior art. That is, the invention provides a diaphragm valve wherein the stem can be operated in a manner that combines the precise movement of the threaded engagement described above, without prejudicing the possibility of operating the valve by means of rotary electric servomotors or of linear pneumatic or hydraulic servomotors, while maintaining the tightening characteristics required by the diaphragm valve.

This object is achieved by a valve as defined in claim 1. Preferred embodiments of the valve according to the invention are defined in the dependent claims.

For better understanding further constructional features, the operation and the advantageous aspects of the invention, an exemplary embodiment thereof will be described herein below with the aid of the accompanying drawings.

### Summary of Drawings

In the drawings:

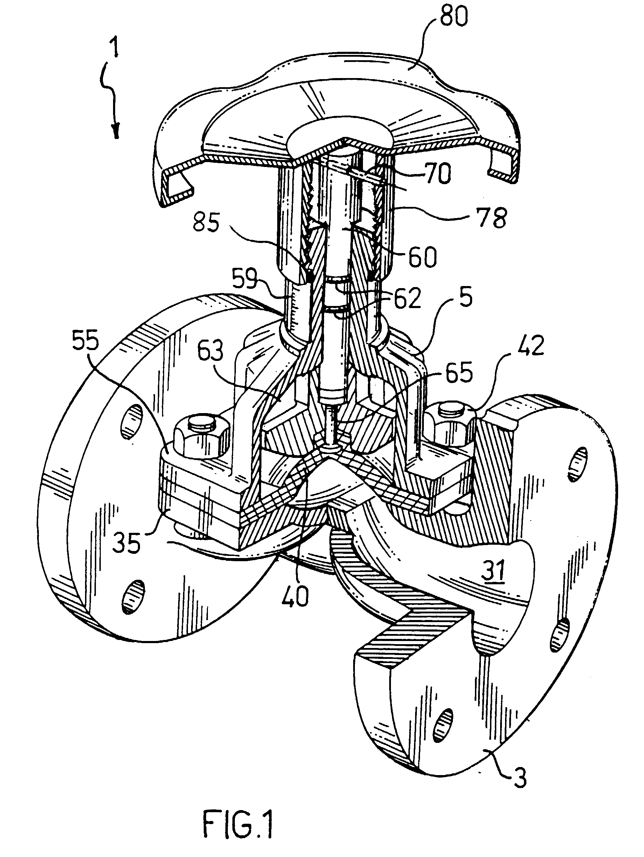

Figure 1 is a partly cutaway perspective view of a valve according to the invention;
Figure 2 is a longitudinal section view of the valve shown in Figure 1;
Figure 3 shows another embodiment of a detail of the valve of the preceding Figures.

### Detailed Description of the Invention

With reference to the drawing views, a diaphragm valve according to the invention is generally shown at 1; it comprises a valve body 3 and an associated dome shaped bonnet 5.

The body 3 has an opening 4 over which the bonnet is placed, and two branches 31 and 32 of a fluidpath extending through the valve are interconnected at the location of an interception seat 33 wherein the valve diaphragm 40 is arranged to operate.

Specifically, this diaphragm is placed between the bonnet 5 and the body 3, the latter parts being joined to each other by bolts 42 disposed on corresponding outward flanges 35 and 55 thereof.

The bonnet 5 has, located upwards of the body 3, a port 56 whence a sleeve 57 extends; the latter is provided with a thread 58 on the exterior of an end oppositely located from the port 56. Further, the unthreaded part of the sleeve 57 exterior is coloured and provided with a scale at 59, which represent indicator means for the open or close position of the valve and hence of its operation. The inner surface of the sleeve 57 is smooth to allow it to fit slidably over a smooth stem 60, the latter being provided on its outer surface with two annular grooves 61 which form respective seats for ring seals 62. The stem 60 extends between a lower end 60a, that is an end located between the aforementioned port 56 and the diaphragm 40, and an upper end 60b which protrudes from the sleeve beyond the thread 58. Mounted on the lower end 60a there is a compressor element 63 having a peg 65 affixed axially to its interior which is anchored to the diaphragm 40; more specifically, the peg 65 connects the compressor element 63 to the diaphragm 40 as it concerns the movements of the former toward and away from the seat 33 together with the stem; further, the compressor element 63 is so connected to the stem as to prevent rotations which occur about the stem axis from being transferred to the diaphragm. The compressor element and its connection to the diaphragm by means of the peg are known per se; however, this connection could be implemented in some other, functionally equivalent forms.

The stem is removably attached at its upper end 60b, by means of a removable pin 70 passed radially therethrough, to a tubular member internally provided with a nut thread 78 matching with the sleeve screw thread 58; throughout this description and the following claims, this tubular member will be simply referred to as the nut thread, for brevity. The valve 1 also has a handwheel 80 for rotating it manually, which is made rigid with the nut thread 78. The latter is also provided, on the opposite end from the handwheel, with a ring seal 85 adapted to slide along the outer surface of the sleeve in a manner to be explained.

The valve just described is manually actuated in the following manner.

Upon turning the handwheel 80 and hence the nut thread 78 rigid therewith, the twisting pair formed by the latter with the screw thread 58 will convert the handwheel rotation to a linear displacement of the nut thread, whereby the stem 60 is displaced axially along the sleeve 57; it should be noticed that in consequence of the connection established by the pin 70, the stem will rotate together with the nut thread and the handwheel, but it is evident that this might not occur if the connection design was different.

Thus, the compressor element 63 acts on the diaphragm 40 to deform it and allow the interception seat 33 to be plugged or cleared according to the direction of the stem displacement, thereby controlling the flow interception through the valve in accordance with conventional methods of prior art.

At this stage, the lowering or raising of the nut thread 78 covers or uncovers the scale 59 on the sleeve exterior, thereby enabling the user to check the valve closing or opening rate; it should be observed that the aforementioned colouring in this example is directed to facilitate the scale reading and provide a qualitative display of simple ascertainment of the valve operational state. Indeed, by using a sufficiently intense colour, for instance a phosphorescent or fluorescent one, an observer can have a rough but immediate indication of the valve open or close condition, by merely estimating the width of the coloured band uncovered by the nut thread.

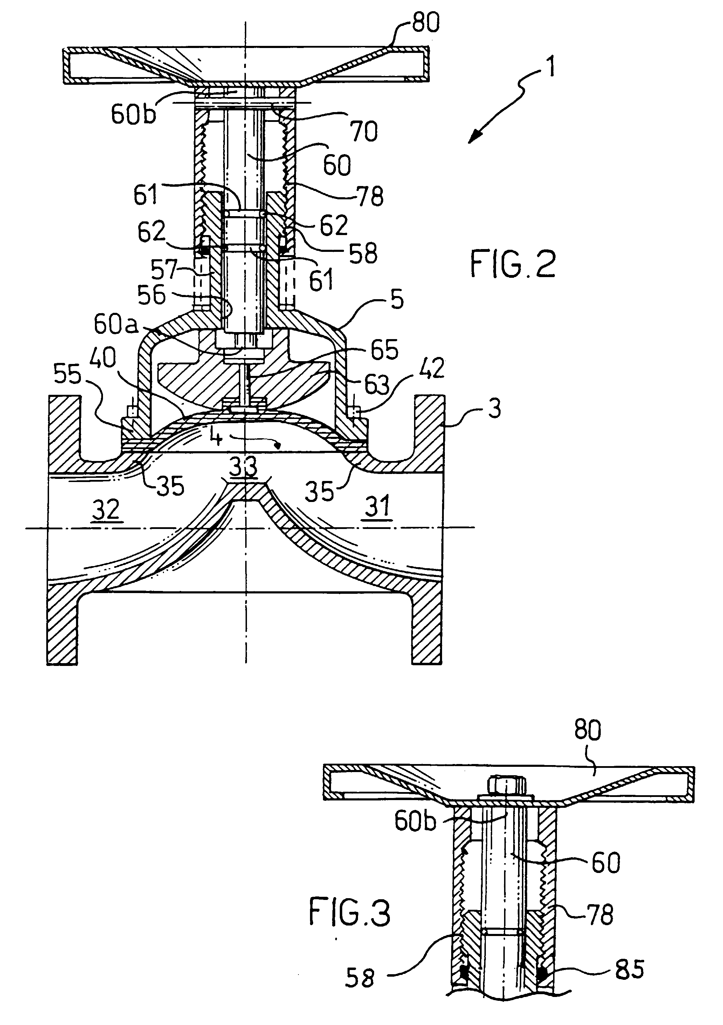

Furthermore, in the valve example described, when the nut thread 78 is screwed fully to close the valve whereby the stem is lowered, it moves into the position shown in dashed lines in Figure 2, that is into contact with the bonnet which provides a bottom stop for the travel of the compressor element; this prevents the excessive tightening of the nut thread that could induce dangerous stresses in the valve parts. Similarly, as regards the top end of the travel of the compressor element, it should be noticed that the combined shapes of the bonnet and the sleeve (see Figure 2) enable to stop the upward movement of such element in the most simple manner.

In the case of switch from manual to servomotor drive, the valve described can be readily adapted to either accept rotary servomotors such as electric motors, or pneumatic or hydraulic servomotors for linearly reciprocating the stem.

By removing the pin 70, the stem 60 can be released from the nut thread 78 so that the latter can be turned off in the usual way and removed together with the handwheel.

The screw thread 58 is thus made available for the connection of a desired servomotor to the stem 60 by means of the pin 70 or. an equivalent thereof.

It is also foreseen that the stem 60 may be driven in a similar manner to that described above in connection with its operation by means of a handwheel, where the servomotor provides a rotary output. It would then be sufficient to provide a nut thread functionally identical to the one previously described, which could be driven by an electric motor or else, mounted on the valve.

In this case, the only difficulty to overcome would practically be that of providing suitable means for transferring the rotary motion to the nut thread, which could follow the axial displacements of the nut thread according to its screwing or unscrewing.

On the other hand, where a servo-motor is employed which reciprocates the stem linearly, this can be mounted using the screw thread 58 and connected to the stem by means of the pin 70 or in any other suitable way. Indeed, it should be noted that in this case, owing to the smooth fitting surfaces of the stem and the sleeve, there is no need to have the bonnet 5 adapted to or replaced together with the sleeve 57 or other valve parts because the stem is able to slide axially following the servomotor drive.

In this respect, it matters to point out that in order to provide a reciprocating linear motion, a manually operated handle control could be used instead of a pneumatic or hydraulic servomotor.

Notice, moreover, that the smooth fitting surfaces of the stem and of the sleeve provide for a further advantage of the invention over the conventional valves previously discussed: the use of ring seals that, obviously, would not be possible with a threaded stem; such seals constitute for the valve a protection against possible leakages of fluid due to a rupture or a damage of the diaphragm, and enhance the security of the valve in critical applications. By an appropriate selection of the ring seal type, the security can be afforded against leakage of fluids with particular characteristics (nature, concentration, etc.) and/or under particular working conditions (pressure, temperature, etc.).

As regards this sealing action, it cannot be excluded that it might be obtained as well by providing annular grooves for the ring seals on the inner surface of the sleeve, so as to have the stem smooth throughout.

In this respect, it should also be noted that conventional threaded stem valves occasionally mount ring seals on smooth end portions of the stem, obviously facing smooth sections of the sleeve inner walls. This requires that the length of such portions and sections be at least equal to the stem travel length, that is equal to the threaded portion of the stem in actual practice; for this reason, therefore, conventional valves using ring seals have stems much longer than those mounting threaded stems with no ring seals, resulting in greatly increased encumbrance.

It should be further noted that the fitting surfaces of the stem and the sleeve enable the stem to be guided without any risk of jamming and avoiding to transmit dangerous bending stresses to it.

It should be noted that by providing the ring seal 85, the nut thread/screw thread engagement is fully protected from external agents, and therefore, reliable in operation; it should be considered that these valves may be used in petrochemical or other plants, which are exposed to particularly severe environmental conditions. It must not be excluded either that this seal may serve also as an additional sealing element, futher to the rings 62 on the stem.

Of course, variations from the example just described are not to be excluded.

For instance, it can be appreciated that the releasable connection between the nut thread and the stem which in the example above is achieved through the pin, could also be obtained in a different manner; as an alternative there could be the keying of the handwheel directly on the stem, obviously while keeping the former rigid with the nut thread. Further in this respect, it worths mentioning that it is not necessary that the type of connection of the nut thread 78 to the stem 60 also transmits rotation to the latter, it being sufficient that the stem moves axially consequently the screwing or unscrewing of the nut thread on the screw thread; in other words, the stem 60 might be connected rotatably to the handwheel 80, such as by means of a bush, which should in all cases be rotationally rigid with the nut thread in order to transfer its axial displacements resulting from the nut thread screwing or unscrewing, to the stem.

In addition, the stem could be arranged to pass through the handwheel and extend beyond it with a longitudinal portion, thereby rendering unnecessary the pin under the handwheel.

Reference could be made for instance, to the case where (see Figure 3) the through-passing portion of the stem is threaded with a smaller diameter than the stem section between the ends 60a and 60b; the handwheel could be brought to bear against the stem end 60b and secured thereon by a simple nut engaging the thread on the protruding portion.

In any case, it should be considered that in some particular instances, such as the use of the inventive valve with low-pressure fluids (e.g. in water pipe networks) it could be thought of not providing a handweel; the nut thread 78 could indeed be rotated directly by hand or using pliers or the like tools. Therefore, it cannot be excluded that the nut thread might be provided with a knurl or be shaped as an anatomical handle or formed with parallel opposite faces for engagement by a wrench or pliers.

Finally, the means 59 indicating the operational state of the valve could also be changed or integrated with respect to the simple scale; the use, for example, of other arrangements for indicating the travel end of the nut thread and the compressor element cannot be excluded, the objective being again that of preventing the transmission of excessive stresses to the diaphragm or other parts of the valve.

## Claims

1. A diaphragm valve comprising a valve body (3) wherethrough a flowpath (31,32) for a fluid is defined which includes an interception valve seat (33), a bonnet (5) removably attached to the valve body (3) to realize an axially and rotationally rigid connection therebetween and provided with a sleeve (57) extending substantially perpendicular to the valve seat (33), a valve diaphragm (40) sandwiched between the valve body (3) and the bonnet (5), a stem (60) passing through the sleeve (57) interior and connected to a compressor element (63) linked to the valve diaphragm (40) to move the latter toward and away from the valve seat (33) according to alternate axial travels of the stem (60), characterized in that the stem (60) is guided to slide axially by the sleeve (57), the outer surface of the stem (60) and the inner surface of the sleeve (57) are substantially smooth and fit each other, between the outer surface of the stem (60) and the inner surface of the sleeve (57) is interposed at least one ring seal (62), the sleeve (57) is provided on the exterior with a screw thread (58) adapted to engage with a nut thread (78) rigid with the stem (60) in the axial direction thereof and removably connected thereto, thereby causing the stem (60) to slide tightly inside the sleeve (57) in consequence of the nut thread (78) screwing or unscrewing on the screw thread (58).

2. A valve according to claim 1, wherein means (80) are provided for manual rotational operation of the nut thread (78).

3. A valve according to claim 2, wherein said manual operation means comprise a handwheel (80) rigid with the nut thread (78) and connected to an end (60b) of the stem (60) protruding from the sleeve (57) by means of a removable pin (70) extending across the nut thread (78) and the stem (60).

4. A valve according to any of the preceding claims, wherein means are provided for the powered operation of stem (60) upon removal of the nut thread (78) therefrom.

5. A valve according to any of the preceding claims, wherein a further ring seal (85) is provided, placed between the nut thread (78) and the sleeve (57) along the part of the latter without the screw thread (58).

6. A valve according to any of the preceding claims, wherein the stem (60) has at least one annular groove (61) on its outer surface forming a seat for the at least one ring seal (62).

7. A valve according to any of the preceding claims, wherein the sleeve (57) is provided on its inner surface with at least one annular groove adapted to form a seat for said at least one ring seal.

8. A valve according to any of the preceding claims, wherein two ring seals (62) are interposed between the outer surface of the stem (60) and the inner surface of the sleeve (57).

9. A valve according to any of the preceding claims, wherein the sleeve (57) is provided on its exterior, along the part without the screw thread (58) thereof, with means (59) for indicating the valve setting conditions.

10. A valve according to any of the preceding claims, wherein the bonnet (5) is substantially dome-shaped and accomodates in its interior the compressor element (63) for which it forms an end of travels away from the diaphragm (40).

## Patentansprüche

1. Membranventil mit einem Ventilkörper (3), durch den ein Strömungsweg (31, 32) für ein Fluid festgelegt ist, der einen Unterbrechungs-Ventilsitz (33) aufweist,
mit einer Kappe (5), die an dem Ventilkörper (3) lösbar angebracht ist zur Realisierung einer axialen und rotationsmäßig festen Verbindung zwischen dem Ventilkörper und der Kappe und die mit einer Buchse (57) versehen ist, welche sich im wesentlichen rechtwinklig zu dem Ventilsitz (33) erstreckt, mit einer Ventilmembran (40), die zwischen dem Ventilkörper (3) und der Kappe (40) eingefügt ist,
mit einem Schaft (60), der durch die Buchse (57) innen hindurchläuft und der mit einem Zusammendrückelement (63) verbunden ist, welches mit der Ventilmembran (40) verbunden ist, um diese entsprechend abwechselnden axialen Bewegungen des Schaftes (60) zu dem Ventilsitz (33) hin bzw. von diesem weg zu bewegen,
**dadurch gekennzeichnet,** dass der Schaft (60) derart geführt ist, daß er durch die Buchse (57) axial gleitet,
dass die Außenseite des Schaftes (60) und die Innenseite der Buchse (57) im wesentlichen glatt sind und aneinander anliegen,
dass zwischen der Außenseite des Schaftes (60) und der Innenseite der Buchse (57) zumindest eine Ringdichtung (62) eingefügt ist,
dass die Buchse (57) auf der Außenseite mit einem Schraubgewinde (58) versehen ist, welches in ein Mutterngewinde (78) einzugreifen vermag, das mit dem Schaft (60) in dessen axialer Richtung fest verbunden ist und das an diesem lösbar angebracht ist, derart, dass dadurch der Schaft (60) veranlaßt wird, infolge des Einschraubens oder Herausschraubens des Mutterngewindes (78) in das bzw. aus dem Schraubgewinde (58) sich innerhalb der Buchse (57) abgedichtet zu verschieben.

2. Ventil nach Anspruch 1, wobei Einrichtungen (80) zur manuellen Drehbetätigung des Mutterngewindes (78) vorgesehen sind.

3. Ventil nach Anspruch 2, wobei die genannten manuellen Betätigungseinrichtungen ein Handrad (80) umfassen, welches mit dem Mutterngewinde (78) fest verbunden ist und welches mit einem Ende (60b) des aus der Buchse (57) herausragenden Schaftes (60) mittels eines lösbaren Stiftes (70) verbunden ist, der durch das Mutterngewinde (78) und den Schaft (60) verläuft.

4. Ventil nach irgendeinem der vorhergehenden Ansprüche, wobei Einrichtungen vorgesehen sind zur angetriebenen Betätigung des Schaftes (60) auf die Entfernung des Mutterngewindes (78) von dem betreffenden Schaft.

5. Ventil nach irgendeinem der vorhergehenden Ansprüche, wobei ferner eine Ringdichtung (85) vorgesehen ist, die zwischen dem Mutterngewinde (78) und der Buchse (57) längs desjenigen Teiles der betreffenden Buchse angeordnet ist, der ohne das Schraubgewinde (58) ist.

6. Ventil nach irgendeinem der vorhergehenden Ansprüche, wobei der Schaft (60) in seiner Außenseite zumindest eine ringförmige Nut (61) aufweist, die einen Sitz für die zumindest eine Ringdichtung (62) bildet.

7. Ventil nach irgendeinem der vorhergehenden Ansprüche, wobei die Buchse (57) auf ihrer Innenseite mit zumindest einer ringförmigen Nut versehen ist, die einen Sitz für die zumindest eine Ringdichtung zu bilden imstande ist.

8. Ventil nach irgendeinem der vorhergehenden Ansprüche, wobei zwei Ringdichtungen (62) zwischen der Außenseite des Schaftes (60) und der Innenseite der Buchse (57) eingefügt sind.

9. Ventil nach irgendeinem der vorhergehenden Ansprüche, wobei die Buchse (57) auf ihrer Außenseite längs desjenigen Teiles, der ohne das Schraubgewinde (58) ist, mit einer die Ventileinstellzustände anzeigenden Einrichtung (58) versehen ist.

10. Ventil nach irgendeinem der vorhergehenden Ansprüche, wobei die Kappe (5) im wesentlichen haubenförmig ist und in ihrem Innern das Zusammendrückelement (63) aufnimmt, für dessen Bewegungen von der Membran (40) weg sie ein Ende bildet.

## Revendications

1. Robinet à membrane comportant un corps de robinet (3) à travers lequel un trajet d'écoulement (31, 32) pour un fluide défini, qui comprend un siège (33) d'obturateur d'interception, un chapeau (5) fixé de façon amovible au corps du robinet (3) pour réaliser une liaison rigide axialement et en rotation entre eux et pourvu d'un manchon (57) s'étendant sensiblement perpendiculairement au siège (33) du robinet, une membrane (40) de robinet intercalée entre le corps (3) de robinet et le chapeau (5), une tige (60) passant à l'intérieur du manchon (57) et reliée à un élément compresseur (63) relié à la membrane (40) du robinet pour rapprocher et éloigner cette dernière du siège (33) du robinet en fonction de courses axiales alternées de la tige (60), caractérisée en ce que la tige (60) est guidée de façon à coulisser axialement par le manchon (57), la surface extérieure de la tige (60) et la surface intérieure du manchon (57) sont sensiblement lisses et ajustées l'une à l'autre, au moins une bague (62) d'étanchéité est interposée entre la surface extérieure de la tige (60) et la surface intérieure du manchon (57), le manchon (57) est pourvu extérieurement d'un filetage de vis (58) conçu pour entrer en prise avec un filetage d'écrou (78) solidaire rigidement de la tige (60) dans la direction axiale de celle-ci et relié de façon amovible à celle-ci, amenant ainsi la tige (60) à coulisser étroitement à l'intérieur du manchon (57) à la suite du vissage ou du dévissage du filetage d'écrou (78) sur le filetage de vis (58).

2. Robinet selon la revendication 1, dans lequel des moyens (80) sont prévus pour une manoeuvre de rotation manuelle du filetage d'écrou (78).

3. Robinet selon la revendication 2, dans lequel lesdits moyens de manoeuvre manuels comprennent un volant (80) solidaire rigidement du filetage d'écrou (78) et relié à une extrémité (60b) de la tige (60) faisant saillie du manchon (57) au moyen d'une goupille amovible (70) s'étendant à travers le filetage d'écrou (78) et la tige (60).

4. Robinet selon l'une quelconque des revendications précédentes, dans lequel des moyens sont prévus pour la manoeuvre par un actionneur de la tige (60) lorsque le filetage d'écrou (78) en est enlevé.

5. Robinet selon l'une quelconque des revendications précédentes, dans lequel une autre bague d'étanchéité (85) est prévue, placée entre le filetage d'écrou (78) et le manchon (57) le long de la partie de ce dernier dépourvue du filetage de vis (58).

6. Robinet selon l'une quelconque des revendications précédentes, dans lequel la tige (60) présente au moins une gorge annulaire (61) sur sa surface extérieure formant un siège pour la, au moins une, bague d'étanchéité (62).

7. Robinet selon l'une quelconque des revendications précédentes, dans lequel le manchon (57) est pourvu, sur sa surface intérieure, d'au moins une gorge annulaire conçue pour former un siège pour ladite, au moins une, bague d'étanchéité.

8. Robinet selon l'une quelconque des revendications précédentes, dans lequel deux bagues d'étanchéité (62) sont interposées entre la surface extérieure de la tige (60) et la surface intérieure du manchon (57).

9. Robinet selon l'une quelconque des revendications précédentes, dans lequel le manchon (57) est pourvu extérieurement, le long d'une partie de ce manchon dépourvu du filetage de vis (58), de moyens (59) destinés à indiquer les états de réglage du robinet.

10. Robinet selon l'une quelconque des revendications précédentes, dans lequel le chapeau (5) est sensiblement en forme de dôme et loge intérieurement l'élément compresseur (63) pour lequel il forme une fin de course d'éloignement de la membrane (40).
